Europäisches Patentamt

European Patent Office

Office européen des brevets

(19)

(11) Veröffentlichungsnummer : **0 056 830 B2**

(12) **NEUE EUROPÄISCHE PATENTSCHRIFT**

(45) Veröffentlichungstag der neuen Patentschrift :
**15.12.93 Patentblatt 93/50**

(51) Int. Cl.⁵ : **G21C 9/00**

(21) Anmeldenummer : **81100534.7**

(22) Anmeldetag : **25.01.81**

(54) **Verfahren zum Vermeiden oder Verringern einer Gefährdung einer Anlage und deren Umgebung durch reagierende Gemische.**

(43) Veröffentlichungstag der Anmeldung :
**04.08.82 Patentblatt 82/31**

(45) Bekanntmachung des Hinweises auf die Patenterteilung :
**26.04.89 Patentblatt 89/17**

(45) Bekanntmachung des Hinweises auf die Entscheidung über den Einspruch :
**15.12.93 Patentblatt 93/50**

(84) Benannte Vertragsstaaten :
**AT BE CH DE FR GB IT LI LU NL SE**

(56) Entgegenhaltungen :
**DE-A- 1 917 184
DE-A- 2 115 264
DE-A- 2 805 476
DE-B- 1 227 577
FR-A- 2 042 604
GB-A- 862 624
US-A- 3 115 450
US-A- 3 307 913
US-A- 3 666 622
US-A- 3 865 688**

(56) Entgegenhaltungen :
**US-A- 4 210 614
NUCLEAR SAFETY, Band 15, Nr. 2, März/April 1974, G.E. WADE: "Evolution and Current Status of the BWR Containment System", Seiten 163-173.
Proceedings of an International Symposium on Nuclear Power Plant Control and Instrumentation, Cannes, 24 - 28. April 1978, Band II, Seiten 469-482, IAEA Wien
"Römpps Chemie Lexikon", Franckh'sche Verlagshandlung, Stuttgart, 1983, Seiten 1874 und 3147
RSK-Leitlinien für Druckwasserreaktoren, Gesellschaft für Reaktorsicherheit mbH, Köln, Seite 5.6-1, 3. Ausgabe, 14.10.81
Gesellschaft für Reaktorsicherheit:
"Deutsche Risikostudie Kernkraftwerk Phase B", Verlag TüV Rheinland 1990, Seiten 568, 569, 608-610, 665, 674 und 677.**

(73) Patentinhaber : **Jahn, Hermann, Dr.
Brentanostrasse 26
D-80807 München (DE)**

(72) Erfinder : **Schweiger, Willy, Dr.-Ing.
Am Mühlanger 81
D-8039 Puchheim (DE)**

EP 0 056 830 B2

**Beschreibung**

Die Erfindung betrifft ein Verfahren gemäß dem Oberbegriff der unabhängigen Ansprüche 1 und 2.

Leichtwasserreaktoren weisen ein Primärkühlmittelsystem auf, welches « gewöhnliches » Wasser als Kühlmittel enthält. Das Kühlmittel dient zur Moderation und Abfuhr der bei der Kernspaltung gewonnenen Wärmeenergie. Bei Siedewasserreaktoren wird die von dem Kühlmittel aufgenommene, bei der Kernspaltung freigesetzte Wärmeenergie direkt, beim Druckwasserreaktor über einen thermisch gekoppelten zweiten Kreislauf (Sekundärkreis) Turbinen zu deren Antrieb zugeführt.

Bei der Konstruktion von Leichtwasserreaktoren werden Störfälle, deren Eintreten nicht mit hinreichender Sicherheit ausgeschlossen werden kann, derart von vorneherein berücksichtigt, daß beim Auftreten eines Störfalles zumindest Teilsysteme des Leichtwasserreaktors abgeschaltet und Not- bzw. Hilfsvorrichtungen eingeschaltet werden, um ihn in einen nicht gefährdenden Zustand zu überführen. Solche Störfälle werden als Auslegungsstörfälle bezeichnet.

Bei einem Bruch einer Primärkühlmittelleitung, der als Kühlmittelverluststörfall bezeichnet wird, handelt es sich um einen Auslegungsstörfall. Der Reaktor erfährt bei einem solchen Bruch eine Schnellabschaltung.

Wegen des Ausfalles des Primärkühlmittelsystems ist es erforderlich, den Reaktorkern notzukühlen, da infolge der beim Leistungsbetrieb entstandenen Spaltprodukte noch weiterhin ausreichend Wärme erzeugt wird, um einen nicht ausreichend gekühlten Kern unter Umständen vollständig schmelzen zu lassen. Diese durch die Spaltprodukte noch erzeugte Wärmeenergie und die ohnedies im Primärkreis des Primärkühlmittelsystems gespeicherte Wassermenge und die darin enthaltene Wärmeenergie führen zu einer heftigen Freisetzung von Wasserdampf in dem Sicherheitsbehälter und einem Druckanstieg in diesen, da sich das aus dem Primärkreis austretende Wasser entspannt. Der Sicherheitsbehälter ist von seiner Konstruktion her für diese Überdruckbelastung ausgelegt.

Es werden zwei Arten von Sicherheitsbehältern unterschieden, deren typische Anwendung derzeit in folgenden Kombinationen besteht :

a) Volldrucksicherheitsbehälter beim Druckwasserreaktor

b) Sicherheitsbehälter im Druckabbausystem beim Siedewasserreaktor.

Ein Kühlmittelverluststörfall führt bei a) dazu, daß die sich in dem Sicherheitsbehälter befindende Luft durch den freigesetzten Wasserdampf zunächst in den oberen Kuppelraum des Sicherheitsbehälters verdrängt wird, während sich der untere Bereich des Sicherheitsbehälters fast ausschließlich mit Wasserdampf füllt.

Bei b) führt ein Kühlmittelverluststörfall dazu, daß zunächst der größte Teil der sich in der sogenannten Druckkammer des Sicherheitsbehälters befindenden Luft und ein Großteil des Wasserdampfes aus diesem Bereich des Sicherheitsbehälters in einen zweiten, die sogenannte Kondensationskammer, die mit dem Sicherheitsbehälter strömungsmäßig verbunden ist, übergeführt wird. Der über Tauchrohre in die Wasservorlage der Kondensationskammer gelangende Wasserdampf wird dort auskondensiert. Die weitere Entwicklung des Geschehens im Sicherheitsbehälter hängt stark von der Art des Kühlmittelverluststörfalles ab.

Versagen bei einem Kühlmittelverluststörfall teil- oder zeitweise die Kühleinrichtungen zur Notkühlung des Reaktorkernes oder sind diese nicht voll wirksam, so kommt es in der Folge zu hohen Temperaturen des Reaktorkernes. Steigen dabei die Temperaturen der Hüllrohre des Reaktorkernes über 800°C, so setzt eine stark exotherme Oxidation ein, bei der innerhalb eines Zeitraumes von Minuten erhebliche Mengen Wasserstoff erzeugt werden. Das in den Brennstabhüllrohren enthaltene Zirkon reagiert mit dem als Kühlmittel verwandten Wasser gemäß der Reaktionsgleichung :

$$Zr + 2H_2O \rightarrow ZrO_2 + 2H_2 + Reaktionswärme$$

Eine solche Reaktion führte beispielsweise beim TMI-2-Störfall (Harrisburg) zur Erzeugung erheblicher Mengen an Wasserstoff und in der Folge zu einer Explosion im Sicherheitsbehälter.

Es ist bekannt, daß Wasserstoff kontinuierlich verbrennen oder sich auf explosions- oder detonationsfähige Gemische anreichern kann, was zu einer erheblichen Gefährdung führt, da bei einem derartig schweren Störfall, bei dem eine erhebliche Zirkon-Wasserreaktion auftritt, gleichzeitig erhöhte Mengen an Spaltprodukten aus dem Reaktorkern in den Sicherheitsbehälter freigesetzt werden. Eine Freisetzung von Spaltprodukten aus einem beschädigten Sicherheitsbehälter in die Umgebung ist um so verhängnisvoller, je früher dies nach Störfalleintritt geschieht. Dabei spielen wegen der kleinen Halbwertszeiten der Spaltprodukte und der Möglichkeit einer Evakuierung der Bevölkerung die ersten Stunden eine entscheidende Rolle. Eine Explosion oder Detonation muß während dieser Phase unter allen Umständen verhindert werden.

Wenn nun im Falle eines Kühlmittelverluststörfalles durch unzureichende Funktion bzw. Versagen des Kühlmittelsystems eine unzulässige Aufheizung des Reaktorkernes eintritt, so kommt es mit dem im Reaktordruckbehälter vorhandenen Wasser zu der oben angegebenen Zirkon-Wasserreaktion, bei der rasch erhebliche Mengen Wasserstoff entstehen. Aus der im Primärkreis vorliegenden Bruch- oder Undichtigkeitsstelle strömt dann ein Dampf- Wasserstoffgemisch aus. Das Kühlmittelsystem wird zu diesem Zeitpunkt bereits weitgehend drucklos sein oder zumindest nach einer ersten Störfallphase drucklos werden, so daß die Ausströmraten niedriger sind, als bei den vorhergehend betrachteten Fällen bzw. Phasen bei denen kein Schmelzen des Reaktorkernes angenommen wurde, so daß trotz niedriger Ausströmraten eine große Menge an Wasserstoff in den Sicherheitsbehälter gelangt. In weiteren Phasen des Kernschmelzfalles entstehen ebenfalls erhebliche Mengen an Wasserstoff aus weiteren Metall-Wasser- und Schmelze-Betonreaktionen. Die Explosivität der Atmosphäre im Sicherheitsbehälter (d.h. Ort, Zeitpunkt, Umfang und Gefahrenpotential) hängt in hohem Maße von der Wasserstoff-Produktion und der gesamten oder auch örtlichen Konzentration von Wasserstoff und Sauerstoff innerhalb des Sicherheitsbehälters ab. Die Entstehung von Wasserstoff geschieht innerhalb eines Zeitraumes von Minuten bis maximal zu wenigen Stunden, während die Verteilung bzw. Durchmischung innerhalb des Sicherheitsbehälters evtl. längere Zeiträume erfordert.

Es gibt verschiedene Vorschläge, um ein Überdruckversagen des Sicherheitsbehälters selbst im Falle des Schmelzens des Reaktorkernes, d.h. auch bei einer auftretenden Wasserstoffverbrennung zu verhindern. Gemäß einem dieser Vorschläge wird der Sicherheitsbehälter mit einem Sekundärbehälter verbunden, so daß sich die im Sicherheitsbehälter befindende Atmosphäre in den Sekundärbehälter ausdehen kann. Es wurde auch vorgeschlagen, Atmosphäre aus dem Sicherheitsbehälter in gesteuerter Weise über entsprechende Reinigungs-Filterstrecken in die freie Atmosphäre abzugeben, was im Falle massiver Spaltproduktfreisetzung jedoch äußerst problematisch ist.

Der Sekundärbehälter kann als Volldruckbehälter oder als Druckabbausystem ausgebildet sein. Die Reinigungsfilterstrecke könnte als eigenständige Maßnahme für den Sicherheitsbehälter oder als Ergänzung für den Sekundärbehälter vorgesehen sein. Zusätzlich oder alternativ, insbesondere für bestehende Anlagen, besteht die Vorstellung, eine brennbare oder explosive Atmosphäre durch reaktionshemmende Additive zu entschärfen. Ein solches reaktionshemmendes Additiv ist beispielsweise eine Feuerlöschsubstanz wie Halon. Für einige Typen von Kernkraftreaktoren ist auch die Inertisierung des Sicherheitsbehälters bereits während des Normalbetriebes vorgesehen, wobei dieser statt Luft mit z. B. Stickstoff gefüllt wird, was erhebliche Nachteile beim Normalbetrieb mit sich bringt.

Selbst wenn bei der konstruktiven Auslegung des Sicherheitsbehälters eine Überdruckbelastung für den Fall eines Störfalles mit Schmelzen des Reaktorkernes berücksichtigt wird, ist eine solche Lösung nicht voll zufriedenstellend, da das Langzeitverhalten des Sicherheitsbehälters und der ihn umgebenden Stahlbetonhülle nicht mit absoluter Sicherheit abzuschätzen ist. Insbesondere mögen die möglicherweise lokal und zeitlich stark unterschiedlichen Temperaturbelastungen beispielsweise zu Haarrissen führen oder Dichtungen beschädigen, wodurch die maximale Druckbelastung des Sicherheitsbehälters bzw. der Stahlbetonhülle verringert wird. Zudem können bei plötzlicher Verbrennung oder Überdruck möglicherweise anschließend kurzzeitige unerwünschte lokale oder integrale Unterdrücke auftreten. Ein weiterer Aspekt ist die Gefährdung sicherheitstechnischer Einrichtungen, insbesondere die Beschädigung von elektrischen Isolationen, weshalb die Verhinderung eines Brandes in der Anlage nach einem Störfall vorrangig ist. Möglicherweise kann hierdurch ein vollständiges Schmelzen des Kernes noch unterbunden werden. Ein Versagen des Sicherheitsbehälters muß in jedem Falle so lange wie möglich verhindert werden (vgl. TMI-2-Störfall).

Der Erfindung liegt die Aufgabe zugrunde, ein Verfahren zum Vermeiden oder Verringern einer Gefährdung einer anlage und deren Umgebung durch Verbrennung von Wasserstoff im Sicherheitsbehälter eines Kernkraftwerkes und/oder durch Spaltproduktfreisetzung aus diesem anzugeben.

Die erfindungsgemäße Lösung für diese Aufgabe ist durch die Kennzeichen der Patentansprüche 1 und 2 angegeben.

Aus der FR-A-2 042 604 ist es an sich bekannt, einen besonderen Bereich innerhalb des Sicherheitsbehälters vorzusehen der durch Klappen von dem restlichen Inneren der Sicherheitsbehälters abgetrennt ist. Diese Klappen sind so ausgebildet, daß dann, wenn innerhalb des Sicherheitsbehälters ein bestimmter Überdruck entsteht, sich diese Klappen öffnen und damit eine Strömungsverbindung zwischen dem Inneren des Sicherheitsbehälters und dem besonderen Bereich herstellen. Sobald der Druck unterhalb des bestimmten Werts liegt, schließen sich die Klappen unter Wirkung der Schwerkraft.

Vorteilhafte Weiterbildungen des Erfindungsgegenstandes ergeben sich aus den abhängigen Ansprüchen.

Wenn es nicht möglich sein sollte, eine ausreichende Trennung der reaktionsfähigen Substanzen zu erreichen, so daß eine Reaktion zwischen diesen Substanzen eintritt, so kann eine Druckwechselbelastung des die Anlage umgebenden Raumes entstehen. Im Falle einer Verbrennung ergibt sich zunächst ein Überdruck, dem nach Wärmeabfuhr und Kondensation der bei der Reaktion entstandenen Substanz ein Unterdruck folgt. Dadurch, daß gemäß einer vorteilhaften Weiterbildung der Erfindung-ein Inertgas vor, während oder nach der Reaktion in den die Anlage umgebenden Raum so eingespeist wird, daß der Unterdruck zumindest teilweise ausgeglichen wird, kann eine Druckwechselbelastung ganz oder zumindest im wesentlichen verhindert werden.

Eine im Rahmen der Erfindung durchgeführte Betrachtung des Ablaufes von Störfällen bei Kernkraftwerken hat dazu geführt, daß nicht nur die Bildung und die Verteilung von Wasserstoff, sondern auch die von Sauerstoff berücksichtigt werden muß.

In vorteilhafterweise wird bei dem erfindungsgemäßen Verfahren ausgenutzt, daß Luft und somit Sauerstoff aus Bereichen des Sicherheitsbehälters oder dem Inneren des Sicherheitsbehälters verdrängt wird. Ist dieser störfallspezifische, selbstständige Vorgang nicht ausreichend, so kann unterstützend ein Inertgas in den Sicherheitsbehälter eingebracht werden. Dies geschieht bevorzugt, zu einem möglichst frühen Zeitpunkt, damit die gesamte Sauerstoffmenge innerhalb des Sicherheitsbehälters bereits stark verringert ist, bevor Wasserstoff in erheblichen Mengen aus dem Reaktorkern freigesetzt, dem Primärkreis oder zu späterem Zeitpunkt aus der Reaktion mit dem Sumpfkühlmittel und/oder dem Betonfundament freigesetzt wird.

Vorteilhafterweise sind die Bereiche des Sicherheitsbehälters in die der Sauerstoff während der ersten Phase des Störfalles, d.h. vor Eintreten der Metall-Wasserreaktion (z. B. Zirkon) verdrängt wird, baulich nahezu vollständig (Druckabbausystem) oder zumindest deutlich (Anlagenräume/Betriebsräume beim Volldrucksicherheitsbehälter) getrennt zu halten. Im Falle der sogenannten alternativen Konzepte mit sekundärem (zusätzlichem) Sicherheitsbehälter und/oder Filterstrecken ist dies gegeben bzw. kann dies entsprechend vorgesehen werden.

Gemäß dem erfindungsgemäßen Verfahren werden Sperreinrichtungen vorgesehen, durch die verhindert wird, daß die sich in dem zweiten Raumbereich befindende oder in diesen eingebrachte sauerstoffhaltige Atmosphäre in den ersten wasserstoffhaltigen Raumbereich gelangen kann.

Im Rahmen der Erfindung ist es von Vorteil, solche Maßnahmen zu verhindern, die für Auslegungsstörfälle vorgesehen sind, die jedoch für schwere « Nicht-Auslegungs-Störfälle » nachteilig sind, da sie zu einer Vermischung oder evtl. sogar zusätzlich zur Reaktionsauslösung (z. B. Zündung) reaktionsfähiger Substanzen oder zum erhöhten Austrag von Schadstoffen aus der Anlage, insbesondere von Spaltprodukten aus Kernkraftwerken, führen. Hierbei kann es sogar notwendig werden, genau entgegengesetzte Maßnahmen, als für Auslegungsstörfälle vorgesehen, zu treffen. Typische Beispiele sind :

1. Nichtdurchmischung der Atmosphäre in dem die Anlage umgebenden Raum.

2. Zusätzliches Einbringen von Gas (z.B. Inertgas oder Dampf)

3. Absaugen von Atmosphäre bzw. Umkehren gerichteter Leckagen.

4. Frühzeitige Abgabe von Atmosphäre.

Im Rahmen der Erfindung ist es von Bedeutung, daß im Falle einer Explosion oder Verbrennung in einer Anlage nicht nur der Gesichtspunkt des dabei entstehenden Überdruckes und der damit verbundenen Überdruck- und Temperaturbelastung des Sicherheitsbehälters zu berücksichtigen ist, sondern daß auch im Inneren des Sicherheitsbehälters eines Kernkraftwerkes ein Unterdruck entsteht, wenn der Sauerstoff der Luft an den Wasserstoff gebunden wird und der entstehende Wasserdampf durch Wärmeabfuhr auskondensiert. Das erfindungsgemäße Verfahren erlaubt, auch einer Unterdruckbelastung zu begegnen, indem in die Anlage ein Inertgas nach dem Auftreten eines Störfalles insbesondere kurz vor oder nach erfolgender Reaktion eingebracht wird. Im Falle einer Einspeisung eines heißen Gases, beispielsweise von Wasserdampf, kann möglicherweise gleichzeitig einer unerwünschten thermischen Materialspannung begegnet werden, insbesondere wenn diese Einspeisung bereits kurz vor Erreichen der Brennbarkeitsgrenze aktiviert wird.

In Hinblick auf andere kerntechnische Konzepte kann es abhängig vom Ablauf bzw. der Charakteristik schwerer Störfälle notwendig werden, die Zielrichtungen des erfindungsgemäßen Verfahrens in einigen Punkten zu vertauschen.

Im weiteren ist es denkbar, daß die Anreicherung der Schadstoffe selbst zu einer heftigen, z. B. physikalischen Reaktion (kritische Masse spaltbarer Elemente) führt, die ihrerseits in der Folge zu einer Gefährdung der Anlage und ihrer Umgebung durch zusätzliche oder andersartige, z. B. chemische und/oder biologische Schadstoffe führen, würde. In diesem Fall kann die Reaktion evtl. durch Verbringen der zunächst freigesetzten Produkte mittels Spülung einer die Reaktion verhindernden oder zumindest verzögernden oder dämmenden Substanz im ersten, besonders gefahrenträchtigen Bereich unterbunden werden. Im Falle drohender Kernreaktionen kann dies, z. B. durch Spülen mit neutronenabsorbierendem Gas (z. B. borhaltigem Wasserdampf) bewirkt werden.

Insgesamt stellt das erfindungsgemäße Verfahren somit ein geschlossenes und auch abgestuft anwendbares Instrumentarium zur Abwendung von Gefahren für Kernkraftwerke (bzw. deren Umgebung) dar.

Der Erfindungsgegenstand wird im folgenden anhand eines Ausführungsbeispiels unter Bezugnahme auf die Zeichnungen näher erläutert, wobei sich weitere Merkmale der Erfindung aus der folgenden Beschreibung ergeben. Es zeigen:

Fig. 1 eine schematische Darstellung eines Siedewasser-Reaktors mit Druckabbausystem, der gemäß der Erfindung ausgestaltet ist

Fig. 2 eine schematische Darstellung einer Druckwasser-Reaktor-Anlage mit einem Volldrucksicherheitsbehälter, der gemäß der Erfindung ausgerüstet ist, und

Fig. 3 eine schematische Darstellung einer Druckwasser-Reaktor-Anlage mit Volldrucksicherheitsbehälter und sekundären Einrichtungen die für die Erfindung ausgerüstet ist.

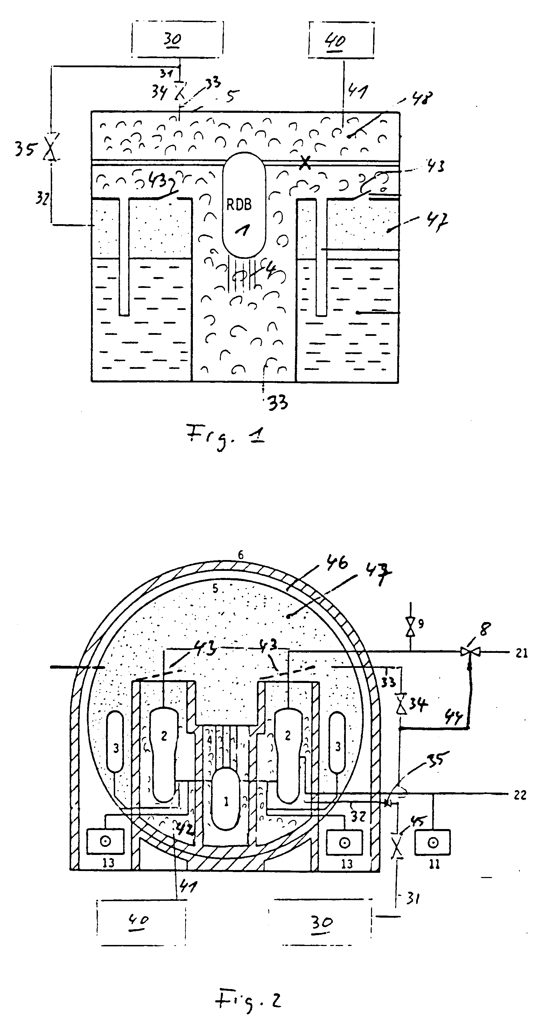

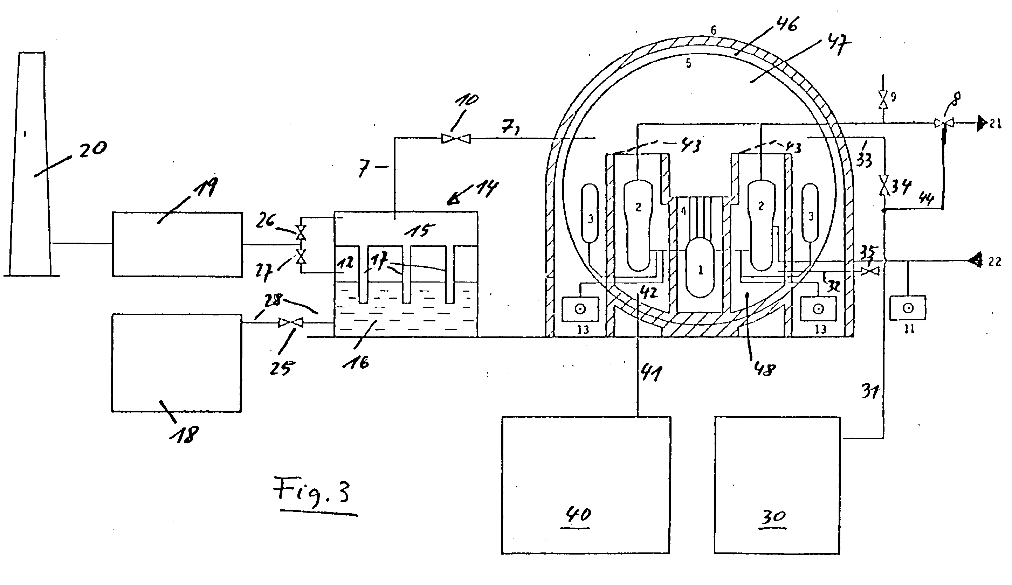

Beide Reaktorsysteme Fig. 1 und 2 verfügen bislang nur über einen einzigen, ersten Sicherheitsbehälter, der jedoch durch weitere Systeme, insbesondere einen weiteren Sicherheitsbehälter und/oder spezielle Filtersysteme ergänzt werden kann, wie dies für zukünftige, alternative Konzepte diskutiert wird. Hierbei wurde bislang im wesentlichen die Verhinderung eines Überdruckversagens des eigentlichen (ersten) Sicherheitsbehälters betrachtet. Durch vergleichsweise geringfügige Änderungen bzw. Ergänzungen, die in Fig. 3 enthalten sind, kann das erfindungsgemäße Verfahren für alle Anlagen genutzt werden.

Dies gilt für das gesamte, mögliche Störfallspektrum, auch wenn aus Gründen der Beschränkung der Beschreibung auf ein vertretbares Maß, hier wiederum nur das Beispiel des weitgehend vollständigen Kernschmelzens herausgegriffen wurde, da dies den mutmaßlich kritischsten Fall darstellt.

Hinsichtlich technischer Einzelheiten von Kernkraftwerken und der bereits installierten oder vorgesehenen Sicherheitseinrichtungen, sowie Eintrittswahrscheinlichkeit, Ablauf und Folgen schwerer Störfälle ohne die Anwendung des erfindungsgemäßen Verfahren, wird auf die einschlägige Fachliteratur verwiesen (Sicherheitsberichte, Risikostudien von Kernkraftwerken usw.).

In einem Sicherheitsbehälter 5, der von einer Stahlbetonhülle 6 umgeben ist, befinden sich ein Reaktordruckbehälter 1, der den Kernreaktor enthält, in dem gesteuert die für die Energieerzeugung erforderlichen Kernreaktionen ablaufen. In dem Sicherheitsbehälter 5 befinden sich ferner Druckspeicher 3 für ein Not- und Nachkühlsystem. Diese Druckspeicher 3 sind mit einem Not- und Nachkühlsystem 13 verbunden, welches auch die für die Steuerung dieses Systems erforderlichen Steuerungselemente aufweist. Ein Reaktorschnellabschaltsystem 4, welches nahe dem Reaktordruckbehälter 1 angeordnet ist, dient dazu, eine schnelle Abschaltung des Reaktors zu ermöglichen.

Schnellabschaltsysteme und Not- und Nachkühlsysteme dienen bei sogenannten Auslegungsstörfällen dazu, die Anlage in einen sicheren Zustand überzuführen, ohne daß hierbei eine unerlaubte Strahlenbelastung der Umgebung eintritt. Versagen solche Systeme, so ist mit einer Überhitzung des Kernes im Reaktordruckbehälter 1 und in der Folge mit größeren Mengen an Wasserstoff und Spaltprodukten im Sicherheitsbehälter 5 zu rechnen, als dies der Auslegung zugrundegelegt wurde. Im Falle des teilweisen oder vollständigen Kernschmelzens ist dann gleichzeitig ein Versagen des Sicherheitsbehälters 5 nicht auszuschließen. Das Kernschmelzen ist durch eine rasche und starke Wasserstoffbildung, insbesondere infolge sogenannter Metall-Wasser-Reaktionen und gleichzeitig aufgrund der hohen Temperaturen und der Zerstörung der sogenannten inneren Sicherheitsbarrieren (Brennstabhüllrohr, Primärkühlmittel-System) durch erhebliche Freisetzung von Spaltprodukten aus dem Brennstoff bzw. der Schmelze in die Atmosphäre des Sicherheitsbehälters 5 ausgezeichnet. Sicherheitsbehälter und Filtersysteme sowie Wasserstoffabbausysteme sind hierfür bislang nicht ausgelegt und zum Teil auch nicht derartigen Situationen anzupassen, so daß eine katastrophale Auswirkung auf Anlage und Umgebung nicht verhindert werden könnte. Durch Ertüchtigung und Anwendung der verschiedenen Maßnahmen des erfindungsgemäßen Verfahrens kann dieser schwere Störfall weitgehend beherrscht oder zumindest eine Auswirkung auf die Umgebung drastisch reduziert werden.

Hierzu müssen zunächst Bereiche des primären d. h. des eigentlichen, ersten Sicherheitsbehälters 5 durch geeignete Vorrichtungen (z. B. steuerbare Klappen 43) bei Bedarf strömungstechnisch von einander getrennt werden können oder es muß ein zusätzlicher, sekundärer Behälter 14 angekoppelt werden können. Dieser kann in bekannter Weise als Volldruckbehälter oder als Druckabbausystem, wie in Fig. 3 beispielhaft durch das Druckabbausystem 14 dargestellt, ausgebildet sein. (Derartige Maßnahmen werden als sogenannte alternative Konzepte bereits diskutiert). In Abweichung zur bisherigen, bekannten Betrachtung soll dieser jedoch nunmehr nicht nur zur Beherrschung des anfallenden Überdruckes im primären Sicherheitsbehälter, sondern vor allem zur Trennung der reaktionsfähigen Komponenten Sauerstoff und insbesondere Wasserstoff dienen, indem eine Spülung des primären Sicherheitsbehälters mit inertem Gas und Trennung erfolgt, ehe große Mengen an vor allem Wasserstoff und Spaltprodukten in die Atmosphäre des primären Sicherheitsbehälters freigesetzt werden.

Ein Vorschlag für eine technische Ausgestaltung des erfindungsgemäßen Verfahrens bei Anwendung auf Leichtwasserreaktoren ist im folgenden beschrieben :

Außerhalb des Sicherheitsbehälters 5 befindet sich ein Sekundärbehälter 14, der ein Druckabbausystem enthält. Der Sekundärbehälter 14 weist eine Kammer 15 auf, die mit einer Wasservorlage 16 über Tauchrohre 17 in Strömungsverbindung steht.

Zwischen dem Inneren des Sicherheitsbehälters 5 und dem Sekundärbehälter ist mindestens eine Verbindungsleitung 7 vorgesehen, die mit einem Ende in das Innere des Sicherheitsbehälters 5 und mit dem anderen Ende in die Kammer 15 mündet. In der Verbindungsleitung 7 ist mindestens ein Steuerventil 10 vorgesehen, durch welches der Durchfluß durch die Verbindungsleitung 7 wahlweise geöffnet oder gesperrt werden kann.

Sowohl die Kammer 15 als auch der sich oberhalb der Wasservorlage befindende Raum 12 sind über z. B. Schieber 26 bzw. 27 strömungsmäßig mit einer Filterstrecke 19 verbunden, welche ihrerseits wiederum strömungsmäßig mit einem Abluftkamin 20 verbunden ist. Die Wasservorlage 16 kann über eine Verbindungsleitung 28 mit einer Abwasseraufbereitungsanlage 18 verbunden sein. In der Verbindungsleitung 28 ist ein z. B. Schieber 25 vorgesehen.

Den Dampferzeugern 2 wird über eine Verbindungsleitung 22 von nicht dargestellten Hauptspeisewasserpumpen Wasser zugeführt. Für den Fall, daß die Hauptspeisewasserpumpen nicht ausreichend arbeiten oder ihr Betrieb versagt, ist ein Notspeisewassersystem 11 vorgesehen, welches mit der Verbindungsleitung 22 verbunden wird um den Dampferzeugern 2 ausreichende Wassermengen zuführen zu können.

Der von den Dampferzeugern 2 erzeugte Dampf wird über eine Verbindungsleitung 21 zu nicht dargestellten Turbinen geführt. In dieser Verbindungsleitung 21 ist ein Frischdampf-Schnellschlußschieber 8 vorgesehen, der dazu dient, die Frischdampfzufuhr zu den Turbinen zu unterbrechen, wenn dieses erforderlich ist. Über ein stromaufwärts des Frischdampf-Schnellschlußschiebers 8 verbundenes Frischdampf-Sicherheitsventil 9 ist es möglich, durch Abführen von Frischdampf den Druck in den Dampferzeugern 2 zu verringern.

Zur Durchführung des erfindungsgemäßen Verfahrens sind gemäß der gezeigten Darstellung Verbindungsleitungen 32 und 33 vorgesehen, welche von außerhalb des Sicherheitsbehälters 5 in dessen Inneres führen. Über Steuerventile 34 und 35 und eine Zuführleitung 31 sind die Verbindungsleitungen 32 und 33 mit einer Gasquelle 30 für ein Inertgas verbunden. Über das aus den Teilen 31 bis 35 bestehende Verbindungssystem kann Inertgas von der Gasquelle 30 in das Innere des Sicherheitsbehälters 5 eingebracht werden. Selbstverständlich können weitere, in den Sicherheitsbehälter führende Verbindungsleitungen und Steuerventile vorgesehen werden, wenn dieses erwünscht ist.

Durch selektive Steuerung der Ventile 35 und 34 ist es möglich, diejenige Gasmenge zu steuern, die an verschiedenen Stellen innerhalb des Sicherheitsbehälters 5 eingebracht werden soll, wobei diese Stellen den Auslässen der Verbindungsleitungen 32 und 33 entsprechen.

Aus Sicherheitsgründen ist es empfehlenswert, ein Noteinspeisungssystem 40 vorzusehen, welches über eine Verbindungsleitung 41 mit dem Inneren des Sicherheitsbehälters 5 verbunden ist. Beim Einsatz der Noteinspeisungseinrichtung strömt das Gas am Auslaß 42 der Verbindungsleitung 41 in den Sicherheitsbehälter 5.

Im folgenden wird dargestellt, auf welche Weise nach der Erfindung im Falle eines Kühlmittelverluststörfalles eine mögliche Gefährdung des Sicherheitsbehälters vermieden wird. Nach dem Auftreten eines Kühlmittelverluststörfalles werden die Steuerventile 10, 34 und 35 geöffnet. Durch das Öffnen der Steuerventile 34 und 35 kann Inertgas aus der Inertgasquelle 30 über die Verbindungsleitungen 31, 32 und 33 in das Innere des Sicherheitsbehälters 5 gelangen.

Grundsätzlich könnte als Inertgaseinspeisung auch Dampf aus dem Sekundärkreis eines Druckwasserreaktors entnommen und über Leitung 44 dem Inertgas-Einspeisesystem 30 zugeführt werden. Dadurch nimmt der Druck der Atmosphäre im Inneren des Sicherheitsbehälters zu, so daß sich in ihm befindende Atmosphäre über die Leitung 7 und das geöffnete Ventil 10 in die Kammer 15 des Sekundärbehälters gelangen kann. Die in den Sekundärbehälter 14 aus dem Inneren des Sicherheitsbehälters 5 überströmende Atmosphäre enthält nicht nur die ursprünglich im Sicherheitsbehälter vorhandene Luft, sondern auch im Zusammenhang mit dem Kühlmittelverluststörfall freigesetzten Wasserdampf und evtl. geringe Mengen Wasserstoff. Nach einem gewissen Zeitraum ist der Anteil der Luft im Inneren des Sicherheitsbehälters so gering geworden, daß keine Gefahr besteht, daß z. B. der nun rasch und in erheblichen Mengen freigesetzte Wasserstoff durch Zündquellen derart verbrennen kann, daß eine Gefährdung durch Verbrennung, Explosion, Quasi-Detonation oder Detonation hervorgerufen wird.

Verbrennt dennoch freigesetzter Wasserstoff mit dem noch im Sicherheitsbehälter enthaltenen Sauerstoff, wodurch eine Druckverringerung der Atmosphäre innerhalb des Sicherheitsbehälters erfolgt, so kann dies erforderlichenfalls durch weiteres Einströmen von Inertgas ausgeglichen werden. Dabei ist es zu diesem Zeitpunkt des Ablaufes des Störfalles von Vorteil, wenn der Druck der Atmosphäre innerhalb des Sicherheitsbehälters 5 auf einem Wert gehalten wird, der unter dem Wert liegt, den die den Sicherheitsbehälter 5 umgebende Atmosphäre aufweist. Hierzu kann die vorzeitige oder nachträgliche Schließung des Steuerventiles 10 oder eine Drosselung oder die Ausbildung als Einwegventil sowie vor Verbrennung evtl. die Erhöhung des Druckes im äußeren sogenannten Ringraum 46 erforderlich sein. Durch den innerhalb des Sicherheitsbehälters 5 vorliegenden relativen Unterdruck wird erreicht, daß keine verseuchte Atmosphäre nach außen gelangen kann, sondern Leckagen nach innen gerichtet sind.

Aus der zu Beginn des Störfalles oder während der Langzeitphase, z. B. aufgrund der aus 46 nach innen gerichteten Leckage des primären Sicherheitsbehälters 5, in den Sekundärbehälter 14 gelangenden Atmosphäre wird der Wasserdampf durch die Wasservorlage 16 auskondensiert und zu einem erwünschten Zeitpunkt der Abwasseraufbereitungseinrichtung 18 zugeführt. Die im gasförmigen Zustand verbleibende Atmosphäre kann nach einem Zeitraum, dessen Länge von der Stärke der Radioaktivität dieser Atmosphäre abhängt, über eine Reinigungsfilterstrecke 19, der ein Abluftkamin 20 nachgeschaltet ist, an die Atmosphäre abgegeben werden.

In besonderen Fällen, z. B. wenn in einer Anfangsphase aufgrund analytischer Erkenntnisse (Mess ng, Simulation) noch ein niedriger Schadstoffgehalt (Spaltprodukte) vorliegt, jedoch eine spätere besonders ungünstige Situation erwartet werden muß, oder Schäden am sekundären Sicherheitsbehälter erkennbar sind, kann es entgegen bestehender Auffassung erfindungsgemäß von Vorteil sein, bereits frühzeitig eine Abgabe von Atmosphäre über Filter 19 und Kamin 20 vorzunehmen.

Grundsätzlich können die erfindungsgemäßen Vorteile auch im Falle von Altanlagen ohne Ergänzung durch zusätzliche Sicherheitsbehälter und Filterstrecken, also unter Nutzung bereits vorhandener Einrichtungen, wie primärer Sicherheitsbehälter und normale Störfallfilter, genutzt werden, wenn diese durch Absperreinrichtungen 43 ergänzt werden, so daß z. B. die Funktion eines sekundären Sicherheitsbehälters durch einen absperrbaren Bereich 47 des primären Sicherheitsbehälters 5 übernommen wird. Hierbei könnte das Auskondensieren von in den sekundären Bereich 47 gelangendem Dampfes beispielsweise durch Außenkühlung des Sicherheitsbehälters beim Druckwasserreaktor (Fig. 2) oder Spraysysteme im Inneren bewirkt werden. Diese strömungstechnisch gerichtet und/oder steuerbar zu trennenden Bereiche sind beim Volldruckbehälter eines Druckwasserreaktors (Fig. 2) vorzugsweise der Bereich der Anlageräume 48 einerseits und der Bereich der Betriebsräume 47 andererseits. die z. B. durch Überströmklappen 43 an den oberen Enden der Dampferzeugertürme getrennt werden. Beim Druckabbausystem wie es derart für Siedewasserreaktoren verwirklicht ist (Fig. 1) sind dies (nach Ertüchtigung) die Bereiche Druckkammer 48 und Kondensationskammer 47.

Es ist auch denkbar im Sinne eines gestaffelten System sowohl die Ergänzungen im primären Sicherheitsbehälter als auch die Erweiterung durch Ankopplung eines sekundären Sicherheitsbehälters vorzunehmen.

Die Realisation des zweiten Sicherheitsbehälters in Form eines Druckabbausystems hat neben zu erwartenden kostenmäßigen Vorzügen die Vorteile, daß hierbei sowohl ein zeitlich nahezu unbegrenztes Spülen des primären Sicherheitsbehälters mit Dampf ermöglicht wird, als auch gelichzeitig die Wasservorlage als kondensierender Gaswäscher genutzt werden kann, wodurch sowohl hinsichtlich der Druckregelung in beiden Sicherheitsbehältern als auch für die Beaufschlagung von Spaltproduktfiltern besonders günstige Voraussetzungen geschaffen werden.

**Patentansprüche**

1. Verfahren zum Vermeiden oder Verringern einer Gefährdung eines nicht vorinertisierten Sicherheitsbehälters eines wassergekühlten Kernreaktors und der in dem Sicherheitsbehälter enthaltenen Ausrüstung durch Mischung der im Sicherheitsbehälter vorhandenen Luft als erste, reaktionsfähige Substanz mit dem bei einem Störfall erzeugten Wasserstoff als zweite, reaktionsfähige Substanz, dadurch gekennzeichnet, daß bei einem Störfall mindestens ein Teil der ersten oder der zweiten reaktionsfähigen Substanz über eine Strömungsverbindung (7, 10) aus dem Sicherheitsbehälter (5) in einen Bereich (14) außerhalb des Sicherheitsbehälters übergeführt wird, indem die Strömungsverbindung (7, 10 geöffnet wird, und daß darauffolgend die Strömungsverbindung (7, 10 geschlossen wird, bevor gefahrdrohende Mengen der verbleibenden Substanz durch die Strömungsverbindung (7, 10) hindurchtreten können.

2. Verfahren zum Vermeiden oder Verringern einer Gefährdung eines nicht vorinertisierten Sicherheitsbehälters eines wassergekühlten Kernreaktors und der in dem Sicherheitsbehälter enthaltenen Ausrüstung durch Mischung der im Sicherheitsbehälter vorhandenen Luft als erste, reaktionsfähige Substanz mit dem bei einem Störfall erzeugten Wasserstoff als zweite, reaktionsfähige Substanz, dadurch gekennzeichnet, daß bei einem Störfall mindestens ein Teil der ersten oder zweiten, reaktionsfähigen Substanz innerhalb des Sicherheitsbehälters (5) über eine Strömungsverbindung in einen abgetrennten Bereich (47) innerhalb des Sicherheitsbehälters (5) übergeführt wird, und daß darauffolgend die Strömungsverbindung geschlossen wird, bevor gefahrdrohende Mengen der verbleibenden Substanz durch die Strömungsverbindung in diesen Bereich (47) hindurchtreten können.

3. Verfahren nach Anspruch 1, dadurch gekennzeichnet, daß der mindestens eine Teil der ersten oder der zweiten reaktionsfähigen Substanz in den Bereich (14) außerhalb des Sicherheitsbehälters (5) übergeführt wird, indem in den Sicherheitsbehälter (5) gasförmiges, reaktionshemmendes und/oder reaktionsneutrales Fluid eingebracht und die Strömungsverbindung (7,10) geöffnet wird.

4. Verfahren nach Anspruch 3, dadurch gekennzeichnet, daß eine solche Menge an reaktionshemmenden und/oder reaktionsneutralem Fluid in den Sicherheitsbehälter (5) eingebracht wird, daß die Konzentration mindestens einer der reaktionsfähigen Substanzen so weit verringert wird, daß eine den Sicherheitsbehälter (5) gefährdende Reaktion nicht möglich ist.

5. Verfahren nach Anspruch 3 oder 4, dadurch gekennzeichnet, daß das reaktionshemmende und/oder reaktionsneutrale Fluid von außerhalb des Sicherheitsbehälters (5) in diesen eingebracht wird oder in in dem Inneren des Sicherheitsbehälters (5) vorgesehenen Behältern enthalten ist und aus diesen in das Innere des Sicherheitsbehälters (5) eingebracht wird.

6. Verfahren nach einem der Ansprüche 3 bis 5, dadurch gekennzeichnet, daß das reaktionshemmende und/oder reaktionsneutrale Fluid ein Inertgas ist.

7. Verfahren nach einem der Ansprüche 3 bis 6, dadurch gekennzeichnet, daß das reaktionshemmende und/oder reaktionsneutrale Fluid in flüssiger Form in den Sicherheitsbehälter (5) eingespeist wird und in diesem verdampft.

8. Verfahren nach einem der Ansprüche 1 bis 7, dadurch gekennzeichnet, daß ein Druckabfall, der durch eine Reaktion zwischen zwei reaktionsfähigen Substanzen in dem Sicherheitsbehälter (5) hervorgerufen wird, durch Einspeisen von Inertgas ausgeglichen oder zumindest verringert wird.

9. Verfahren nach einem der Ansprüche 1 oder 3 bis 7, dadurch gekennzeichnet, daß als Bereich außerhalb des Sicherheitsbehälters (5) ein zusätzlicher Behälter (14) verwendet wird.

10. Verfahren nach Anspruch 9. dadurch gekennzeichnet, daß ein oder mehrere als Volldruckbehälter oder Druckabbausystem-Behälter als zusätzliche(r) Behälter verwendet wird bzw. werden.

11. Verfahren nach Anspruch 3, dadurch gekennzeichnet, daß als Fluid in den Sicherheitsbehälter (5) Wasserdampf eingebracht wird und die Strömungsverbindung (7, 10) zu einem Druckabbausystem (14) hergestellt wird.

12. Verfahren nach Anspruch 11, dadurch gekennzeichnet. daß mindestens ein Teil des Wasserdampfes von dem Kernkraftwerk selbst geliefert wird, vorzugsweise bei als Druckwasserreaktor ausgebildetem Kernkraftwerk durch dessen Sekundärkreis.

13. Verfahren nach einem der Ansprüche 1 bis 12, dadurch gekennzeichnet, daß zwischen der Atmosphäre in dem Sicherheitsbehälter (5) und der diesen umgebenden Atmosphäre eine Druckdifferenz derart aufrechterhalten wird, daß Leckagen in das Innere des Sicherheitsbehälters (5) gerichtet sind.

14. Verfahren nach einem der Ansprüche 1 bis 12, dadurch gekennzeichnet, daß auf den Sicherheitsbehälter (5) ein gegenüber dem normalen Atmosphärenaußendruck erhöhter Außendruck aufgebracht wird.

15. Verfahren nach einem der Ansprüche 1 oder 3 bis 7 oder 13, wenn letzterer nicht auf Anspruch 2 bezogen ist, dadurch gekennzeichnet, daß der Bereich außerhalb des Sicherheitsbehälters (5) die freie Atmosphäre ist und die in dem Sicherheitsbehälter (5) enthaltene Atmosphäre über eine Filtereinrichtung an die freie Außenatmosphäre zu einem Zeitpunkt abgegeben wird, zu dem in dem Sicherheitsbehälter (5) eine noch geringe Konzentration an Schadstoffen, wie z. B. Kernspaltprodukten, vorliegt.

**Claims**

1. Method of avoiding or reducing an endangerment to a non-preinerted containment structure of a water-cooled nuclear reactor and to the equipment contained in the containment structure by mixing of the air present in the containment structure, as first reactive substance, with the hydrogen produced in the event of an incident, as second reactive substance, characterized in that, in the event of an incident, at least a part of the first or of the second reactive substance is transferred via a flow connection (7, 10) out of the containment structure (5) into an area (14) outside the containment structure, by the flow connection (7, 10) being opened, and in that thereafter the flow connection (7, 10) is closed before hazardous quantities of the remaining substance can pass through the flow connection (7, 10).

2. Method of avoiding or reducing an endangerment to a non-preinerted containment structure of a water-cooled nuclear reactor and to the equipment contained in the containment structure by mixing of the air present in the containment structure, as first reactive substance, with the hydrogen produced in the event of an incident, as second reactive substance, characterized in that, in the event of an incident, at least a part of the first or second reactive substance is transferred within the containment structure (5) via a flow connection into a separated area (47) within the containment structure (5), and in that thereafter the flow connection is closed before hazardous quantities of the remaining substance can pass through the flow connection into this area (47).

3. Method according to Claim 1, characterized in that at least a part of the first or of the second reactive substance is transferred into the area (14) outside the containment structure (5), by gaseous, reaction-inhibiting and/or reaction-neutral fluid being introduced into the containment structure (5) and the flow connection (7, 10) being opened.

4. Method according to Claim 3, characterized in that such a quantity of reaction-inhibiting and/or reaction-neutral fluid is introduced into the containment structure (5) that the concentration at least of one of the reactive substances is reduced to such an extent that a reaction endangering the containment structure (5) is not possible.

5. Method according to Claim 3 or 4, characterized in that the reaction-inhibiting and/or reaction-neutral fluid is introduced from outside the containment structure (5) into the latter or is contained in structures provided in the interior of the containment structure (5) and is introduced from these into the interior of the containment structure (5).

6. Method according to one of Claims 3 to 5, characterized in that the reaction-inhibiting and/or reaction-neutral fluid is an inert gas.

7. Method according to one of Claims 3 to 6, characterized in that the reaction-inhibiting and/or reaction-neutral fluid is fed into the containment structure (5) in liquid form and evaporates in the latter.

8. Method according to one of Claims 1 to 7, characterized in that a pressure drop which is induced by a reaction between two reactive substances in the containment structure (5) is equalized or at least reduced by feeding of inert gas.

9. Method according to one of Claims 1 or 3 to 7, characterized in that an additional structure (14) is used as area outside the containment structure (5).

10. Method according to Claim 9, characterized in that one or more full pressure containment structures or pressure suppression system structures is or are used as additional structure(s).

11. Method according to Claim 3, characterized in that steam is introduced into the containment structure (5) as fluid and the flow connection (7, 10) made to a pressure suppression system (14).

12. Method according to Claim 11, characterized in that at least a part of the steam is supplied by the nuclear power station itself, in the case of a nuclear power station designed as a pressurized water reactor preferably by its secondary circuit.

13. Method according to one of Claims 1 to 12, characterized in that a pressure difference is maintained between the atmosphere in the containment structure (5) and the atmosphere surrounding the latter such that leaks are directed into the interior of the containment structure (5).

14. Method according to one of Claims 1 to 12, characterized in that an external pressure which is increased with respect to normal atmospheric external pressure is applied to the containment structure (5).

15. Method according to one of Claims 1 or 3 to 7 or 13 if the latter is not related to Claim 2, characterized in that the area outside the containment structure (5) is the free atmosphere and the atmosphere contained in the containment structure (5) is discharged via a filter device to the free outside atmosphere at a time at which there is a still small concentration of pollutants, such as for example nuclear fission products, in the containment structure (5).

## Revendications

1. Procédé pour éviter ou diminuer le risque que courent une enveloppe de sécurité, non préalablement remplie d'un gaz inerte, d'un réacteur nucléaire refroidi à l'eau, et l'équipement contenu dans l'enveloppe de sécurité, par mélange de l'air existant dans l'enveloppe de sécurité, jouant le rôle de première substance susceptible de réagir, avec l'hydrogène produit en cas d'incident, jouant le rôle de seconde substance susceptible de réagir, caractérisé en ce que, en cas d'incident, au moins une partie de la première ou de la seconde substances susceptibles de réagir est transférée, par l'intermédiaire d'une liaison pour écoulement (7, 10), depuis l'enveloppe de sécurité (5), dans une zone (14) située à l'extérieur de l'enveloppe de sécurité, du fait que l'on ouvre la liaison pour écoulement (7, 10); et en ce qu'ensuite on ferme la liaison pour écoulement (7, 10) avant que des quantités dangereuses de la substance restante ne puissent pénétrer par la liaison pour écoulement (7, 10).

2. Procédé pour éviter ou diminuer le risque que courent une enveloppe de sécurité, non préalablement remplie d'un gaz inerte, d'un réacteur nucléaire refroidi à l'eau, et l'équipement contenu dans l'enveloppe de sécurité, par mélange de l'air existant dans l'enveloppe de sécurité, jouant le rôle de première substance susceptible de réagir, avec l'hydrogène produit en cas d'incident, jouant le rôle de seconde substance suspectible de réagir, caractérisé en ce que, en cas d'incident, au moins une partie de la première ou de la seconde substances susceptibles de réagir, se trouvant à l'intérieur de l'enveloppe de sécurité (5), est transférée, par l'intermédiaire d'une liaison pour écoulement, dans une zone distincte (47) située à l'intérieur de l'enveloppe de sécurité (5); et en ce qu'ensuite on ferme la liaison pour écoulement avant que des quantités dangereuses de la substance restante ne puissent pénétrer, par la liaison par écoulement, dans cette zone (47).

3. Procédé selon la revendication 1, caractérisé en ce que la partie de la première ou de la seconde substances susceptibles de réagir qui est au moins transférée dans la zone (14) située à l'extérieur de l'enveloppe de sécurité (5) l'est par le moyen que l'on envoie dans l'enveloppe de sécurité (5) un fluide gazeux, inhibiteur de la réaction et/ou neutralisant la réaction et que l'on ouvre la liaison pour écoulement (7, 10).

4. Procédé selon la revendication 3, caractérisé en ce que l'on envoie dans l'enveloppe de sécurité (5) une quantité de fluide inhibiteur de la réaction et/ou neutralisant la réaction telle que la concentration d'au moins l'une des substances susceptibles de réagir devient suffisamment faible pour qu'une réaction dangereuse pour l'enveloppe de sécurité (5) ne soit plus possible.

5. Procédé selon la revendication 3 ou 4, caractérisé en ce que le fluide inhibiteur de la réaction et/ou neutralisant la réaction est envoyé dans l'enveloppe de sécurité (5) depuis l'extérieur de cette enveloppe, ou bien qu'il est contenu dans des récipients prévus à l'intérieur de l'enveloppe de sécurité (5) et qu'il est envoyé, à partir de ces récipients, dans l'intérieur de l'enveloppe de sécurité (5).

6. Procédé selon l'une des revendications 3 à 5, caractérisé en ce que le fluide inhibiteur de la réaction et/ou neutralisant la réaction est un gaz inerte.

7. Procédé selon l'une des revendications 3 à 6, caractérisé en ce que le fluide inhibiteur de la réaction et/ou neutralisant la réaction est introduit sous forme liquide dans l'enveloppe de sécurité (5) et s'y vaporise.

8. Procédé selon l'une des revendications 1 à 7, caractérisé en ce que l'on compense, ou tout au moins on réduit, par introduction de gaz inerte, une chute de pression provoquée par une réaction entre deux substances susceptibles de réagir et se trouvant dans l'enveloppe de sécurité (5).

9. Procédé selon l'une des revendications 1 ou 3 à 7, caractérisé en ce que comme zone située à l'extérieur de l'enveloppe de sécurité (5), on emploie un récipient supplémentaire (14).

10. Procédé selon la revendication 9, caractérisé en ce que, comme récipient supplémentaire, ou récipients supplémentaires, on emploie un ou plusieurs récipients sous pleine pression ou récipients d'un système de suppression de la pression.

11. Procédé selon la revendication 3, caractérisé, en ce que l'on envoie de la vapeur d'eau comme fluide dans l'enveloppe de sécurité (5) et que la liaison pour écoulement (7, 10) est réalisée avec un système de suppression de la pression (14).

12. Procédé selon la revendication 11, caractérisé en ce qu'au moins une partie de la vapeur d'eau est fournie par la centrale nucléaire elle-même, de préférence, dans le cas d'une centrale nucléaire conçue sous forme de réacteur à eau sous pression, par son circuit secondaire.

13. Procédé selon l'une des revendications 1 à 12, caractérisé en ce qu'entre l'atmosphère qui règne dans l'enveloppe de sécurité (5) et l'atmosphère qui l'entoure, on maintient une différence de pression telle que les fuites sont dirigées vers l'intérieur de l'enveloppe de sécurité (5).

14. Procédé selon l'une des revendications 1 à 12, caractérisé en ce que l'on applique sur l'enveloppe de sécurité (5) une pression extérieure relevée par rapport à la pression normale de l'atmosphère extérieure.

15. Procédé selon l'une des revendications 1 ou 3 à 7 ou 13, lorsque cette dernière ne se rapporte pas à la revendication 2, caractérisé en ce que la zone située à l'extérieur de l'enveloppe de sécurité (5) est l'atmosphère extérieure libre; et en ce que l'on évacue à l'atmosphère extérieure libre, par l'intermédiaire d'un dispositif de filtration, l'atmosphère contenu dans l'enveloppe de sécurité (5) à un moment où il y a dans l'enveloppe de sécurité (5) une concentration encore faible en produits polluants, comme par exemple en produits de fission nucléaire.

Fig. 1

Fig. 2

Fig.3

EP 0 056 830 B2